# EUROPÄISCHE PATENTSCHRIFT

(11) **EP 3 784 534 B1**
(45) Veröffentlichungstag und Bekanntmachung des Hinweises auf die Patenterteilung: **23.02.2022**
(21) Anmeldenummer: 19722018.9
(22) Anmeldetag: 24.04.2019
(51) Int. Cl.: B60S 1/56, G01S 17/00, G06T 7/00

(54) **REINIGUNG VON UMFELDSENSOREN EINES KRAFTFAHRZEUGS**
CLEANING OF ENVIRONMENT SENSORS OF A MOTOR VEHICLE
NETTOYAGE DE CAPTEURS D'ENVIRONNEMENT D'UN VÉHICULE AUTOMOBILE

(30) Priorität: 25.04.2018 DE 102018206384
(43) Veröffentlichungstag der Anmeldung: 03.03.2021
(73) Patentinhaber: Bayerische Motoren Werke Aktiengesellschaft, 80809 München (DE)
(72) Erfinder: PYVOVAR, Dimitri, 81539 München (DE); LOTTERMANN, Christian, 80687 München (DE)
(86) Internationale Anmeldenummer: PCT/EP2019/060528
(87) Internationale Veröffentlichungsnummer: WO 2019/207002

(56) Entgegenhaltungen:
- DE-A1-102016 212 716
- DE-A1-102016 218 331
- US-A1- 2015 172 582

## Beschreibung

Die Erfindung betrifft ein System zum Reinigen von Umfeldsensoren eines Kraftfahrzeugs, die sich in von ihnen jeweilig zum Erfassen von Umfeldinformationen eingesetzten Messprinzipien voneinander unterscheiden, aufweisend pro Umfeldsensor wenigstens eine Behandlungseinrichtung zum Entfernen einer Verunreinigung von dem Umfeldsensor und wenigstens eine mit dem Umfeldsensor verbundene Sensorelektronik, wobei jede Sensorelektronik eingerichtet ist, eine Datenqualität von Sensordaten, die von dem mit ihr verbundenen Umfeldsensor erzeugt werden, zu überwachen, bei einer Verschlechterung der Datenqualität dieser Verschlechterung eine bestimmte Ursache aus verschiedenen möglichen Ursachen zuzuordnen und ein Informationssignal zu erzeugen, das eine Information zur bestimmten Ursache der Verunreinigung enthält. Des Weiteren betrifft die Erfindung ein Kraftfahrzeug mit einem solchen System.

Zudem betrifft die Erfindung ein Verfahren zum Reinigen von wenigstens zwei Umfeldsensoren eines Kraftfahrzeugs, die sich in von ihnen jeweilig zum Erfassen von Umfeldinformationen eingesetzten Messprinzipien voneinander unterscheiden, wobei für jeden Umfeldsensor eine Datenqualität von Sensordaten, die von dem jeweiligen Umfeldsensor erzeugt werden, überwacht wird, bei einer Verschlechterung der Datenqualität dieser Verschlechterung eine bestimmte Ursache aus verschiedenen möglichen Ursachen zugeordnet wird und ein Informationssignal erzeugt wird, das eine Information zur bestimmten Ursache der Verunreinigung enthält.

Es ist bekannt, ein Kraftfahrzeug mit einem System zum Ermitteln von Umfeldinformationen zu einem Umfeld des Kraftfahrzeugs auszustatten. Insbesondere aktuelle und künftige automatisierte Fahrfunktionen nutzen entsprechend gewonnene Umfeldinformationen zur Realisierung eines teilautonomen oder autonomen Fahrbetriebs. Aber auch anderweitige Fahrassistenzsysteme können auf solche Umfeldinformationen zugreifen. Die Umfeldinformationen können mittels Umfeldsensoren erfasst werden, die an dem Kraftfahrzeug angeordnet sind und zur Erfassung von Umfeldinformationen verschiedene Messprinzipien einsetzen können. Beispielsweise können Umfeldsensoren in Form von Kameras, LiDAR-Sensoren, RADAR-Sensoren und dergleichen verwendet werden, auch in verschiedener Kombination miteinander.

Durch unterschiedliche Umwelteinflüsse kann das Sichtfeld einer Sensoroberfläche eines Umfeldsensors teilweise oder vollständig mit Fremdstoffen oder dergleichen belegt bzw. verunreinigt sein. Beispielsweise kann die Sensoroberfläche durch im Fahrbetrieb des Kraftfahrzeugs durch das Kraftfahrzeug selbst oder durch vorausfahrende Fahrzeuge aufgewirbelte Partikel und/oder Flüssigkeiten, durch Schnee, durch Eis oder dergleichen, insbesondere im Herbst, Winter und Frühjahr, verunreinigt werden. Dies führt zwangsläufig zu einer Verschlechterung der Datenqualität der von dem Umfeldsensor erzeugten Sensordaten. Bei einer aus einem Umfeldsensor und einer Sensorelektronik gebildeten Sensoreinheit, bei der eine Verarbeitung der Sensordaten individuell mittels der Sensorelektronik erfolgt, um Erkennungsfunktionen, wie beispielsweise eine Objekterkennung, eine Hinderniserkennung oder eine Fahrbahnerkennung, sensornah zu realisieren, kann die Verschlechterung der Datenqualität zu einer signifikanten Beeinträchtigung der Erkennungsfunktionen führen. Dies kann beispielsweise zu einem Fehlverhalten oder einem nicht erforderlichen Abschalten einer Fahrerassistenzfunktion führen, wie beispielsweise einem Autobahnassistenten, einer Abstandsregelung oder dergleichen.

Zusätzlich zu den Erkennungsfunktionen sind in herkömmlichen Sensoreinheiten bzw. deren Sensorelektroniken sogenannte Verunreinigungserkennungs- und Bilderkennungsalgorithmen installiert. Diese Algorithmen können eine teilweise und vollständige Verdeckung der Sensoroberfläche durch deren Verunreinigung erkennen und (sensorabhängig) eine Klassifikation der jeweiligen Verunreinigung auf Basis der Sensordaten mit verschlechterter Datenqualität durchführen, wobei der Verdeckung bzw. verschlechterten Datenqualität eine bestimmte Ursache aus verschiedenen möglichen Ursachen zugeordnet wird. Es zeigt sich jedoch, dass eine solche Klassifizierung teilweise fehlerbehaftet ist.

Um die Verfügbarkeit der durch die Umwelteinflüsse beeinträchtigten Umfeldsensoren zu steigern, ist es bekannt, die Umfeldsensoren mit verfügbarkeitserhöhenden Maßnahmen zu kombinieren. Beispielsweise kann an einer Sensoroberfläche ein Heizsysteme angeordnet sein, insbesondere um Eis, Kondensat oder dergleichen durch eine Wärmebehandlung der Sensoroberfläche von dieser zu entfernen. Ein solches Heizsystem kann einen bestrombaren Heizdraht aufweisen, der im Bereich der Sensoroberfläche angebracht ist. Des Weiteren kann ein Umfeldsensor mit einem Reinigungssystem kombiniert sein, das für den Umfeldsensor wenigstens eine Waschwasserspritzdüse aufweisen kann, die die Sensoroberfläche mit einem Wasserstrahl behandeln und hierdurch reinigen kann. Dieses Reinigungsprinzip ist analog zu einer Scheinwerferreinigungsanlage.

DE 10 2016 218 331 A1 offenbart eine Waschwasserdosiervorrichtung für ein Kraftfahrzeug, mittels welcher verschiedenste, an einem Kraftfahrzeug vorgesehene Sensoren gereinigt und somit betriebsbereit gehalten werden können.

US 2015/0172582 A1 offenbart eine Einrichtung zur Überwachung einer Fahrzeugumgebung mit einem Sensor. Eine Linsenwascheinrichtung wird von einer Linsenzustandsentscheidungseinheit angesteuert, sofern Bedarf besteht.

DE 10 2016 212 716 A1 offenbart eine Steuervorrichtung und ein Verfahren, bei welchen eine Recheneinrichtung dazu ausgebildet ist, erfasste Fahrzeuginformationen basierend auf den Fahrzeuginformationen, welche mittels einer weiteren Erfassungseinrichtung ermittelt worden sind, zu vergleichen.

Es wird herkömmlich davon ausgegangen, dass die verfügbarkeitserhöhenden Maßnahmen direkt vom Umfeldsensor bzw. der damit verbundenen Sensorelektronik oder von einer mit dem Umfeldsensor verbundenen zentralen Einheit bedarfsmäßig und automatisiert angesteuert werden. Eine Ansteuerung der verfügbarkeitserhöhenden Maßnahmen findet dann statt, sobald mittels der Sensorelektronik bzw. der zentralen Einheit festgestellt worden ist, dass ein vorgegebenes Ausmaß einer Verunreinigung des jeweiligen Umfeldsensors bzw. ein vorgegebenes Ausmaß einer Verschlechterung der Datenqualität der von dem Umfeldsensor erzeugten Sensordaten vorliegt, und eine Klassifizierung der Verunreinigung bzw. Datenqualitätsverschlechterung entsprechend den oben genannten äußeren Umwelteinflüssen stattgefunden hat.

Durch die herkömmlich meist direkt in der mit einem Umfeldsensor kombinierten Sensorelektronik ausgeführten Verunreinigungserkennungs- und Bilderkennungsalgorithmen können die Ursachen für die jeweilige Verunreinigung der Umfeldsensoren bzw. die Verschlechterung der Datenqualität der von dem Umfeldsensor erzeugten Sensordaten nicht immer korrekt erkannt werden. Beispielsweise kann bei einem Kamerasystem, das die Umfeldinformationen optisch aufnimmt, das Vorhandensein von Nebel fälschlicherweise kann als Salzverunreinigung des Umfeldsensors bewertet werden.

Durch eine hohe Falscherkennungsrate der Verunreinigungserkennung bzw. Datenqualitätserkennung kann es vorkommen, dass verfügbarkeitserhöhende Maßnahmen zu falschen Zeitpunkten oder zu oft angesteuert werden. Beispielsweise kann bei Nebel ein Reinigungssystem zum Beaufschlagen eines Umfeldsensors mit Waschwasser fälschlicherweise eingeschaltet werden, wenn die Verunreinigungserkennung fälschlicherweise eine tatsächlich nicht vorliegende Salzverunreinigung des Umfeldsensors meldet. Dies führt zu einem erhöhten Verbrauch der verfügbarkeitserhöhenden Maßnahmen, nämlich einem erhöhten Waschwasserverbrauch bei einem fälschlicherweise angesteuerten Reinigungssystem und einem erhöhten elektrischen Energieverbrauch bei einem fälschlicherweise angesteuerten Umfeldsensor-Heizsystem.

Eine Aufgabe der Erfindung ist es, ein Auftreten von Falschauslösungen von verfügbarkeitserhöhenden Maßnahmen, mit denen die Verfügbarkeit von Umfeldsensoren eines Kraftfahrzeugs steigerbar ist, weitestgehend zu reduzieren.

Diese Aufgabe wird durch die unabhängigen Patentansprüche gelöst. Vorteilhafte Ausgestaltungen sind in den abhängigen Patentansprüchen, der nachfolgenden Beschreibung und den Figuren wiedergegeben, wobei diese Ausgestaltungen jeweils für sich genommen oder in Kombination von wenigstens zwei dieser Ausgestaltungen miteinander einen weiterbildenden oder vorteilhaften Aspekt der Erfindung darstellen können.

Ein erfindungsgemäßes System zum Reinigen von Umfeldsensoren eines Kraftfahrzeugs, die sich in von ihnen jeweilig zum Erfassen von Umfeldinformationen eingesetzten Messprinzipien voneinander unterscheiden, weist pro Umfeldsensor wenigstens eine Behandlungseinrichtung zum Entfernen einer Verunreinigung von dem Umfeldsensor und wenigstens eine mit dem Umfeldsensor verbundene Sensorelektronik auf, wobei jede Sensorelektronik eingerichtet ist, eine Datenqualität von Sensordaten, die von dem mit ihr verbundenen Umfeldsensor erzeugt werden, zu überwachen, bei einer Verschlechterung der Datenqualität dieser Verschlechterung eine bestimmte Ursache aus verschiedenen möglichen Ursachen zuzuordnen und ein Informationssignal zu erzeugen, das eine Information zur bestimmten Ursache der Verunreinigung enthält. Zudem weist das System wenigstens eine mit den Sensorelektroniken verbundene Auswertungselektronik auf, die eingerichtet ist, die Ursachen gemäß den Informationssignalen auf ihre jeweilige Plausibilität zu prüfen und die Behandlungseinrichtungen in Abhängigkeit der plausibelsten Ursache anzusteuern.

Erfindungsgemäß werden die Ursachen gemäß den Informationssignalen auf ihre jeweilige Plausibilität geprüft, indem die von zwei oder mehreren, insbesondere allen, Sensorelektroniken ermittelten Ursachen mittels der zentralen Auswertungselektronik ausgewertet bzw. miteinander verglichen werden, um zu ermitteln, welche Ursache auf Basis der vorliegenden Informationssignale am plausibelsten ist. Dadurch können die Behandlungseinrichtungen in Abhängigkeit der plausibelsten Ursache angesteuert, beispielsweise einzeln oder gemeinsam aktiviert, werden, statt dass eine herkömmliche individuelle Ansteuerung von Behandlungseinrichtungen unabhängig davon erfolgt, ob die individuell mittels einer Sensorelektronik ermittelte Ursache der Verschlechterung der Datenqualität plausibel ist oder nicht. Hierdurch kann das Auftreten von Falschauslösungen der verfügbarkeitserhöhenden Maßnahmen, nämlich der mit den Behandlungseinrichtungen durchgeführten Maßnahmen, durch eine zentrale Plausibilisierung der von zwei oder mehreren Sensorelektroniken ermittelten Ursachen weitestgehend reduziert werden.

Durch die erfindungsgemäße Reduzierung des Auftretens von Falschauslösungen der verfügbarkeitserhöhenden Maßnahmen, kann beispielsweise im Falle einer Behandlungseinrichtung in Form eines Reinigungssystems zum Behandeln der Sensoroberfläche des jeweiligen Umfeldsensors eine zum entsprechenden Behandeln vorgesehene Reinigungsflüssigkeit, insbesondere Wasser mit oder ohne Zusatzmittel, eingespart werden. Hiermit geht eine potentielle Reduzierung der Größe eines Reinigungsflüssigkeitstanks einher, was mit einer Reduzierung des Fahrzeuggewichts verbunden ist. Ist die Behandlungseinrichtung hingegen als Heizeinheit zum Heizen einer Sensoroberfläche des jeweiligen Umfeldsensors ausgebildet, kann das fälschliche Auftreten von Heizzyklen und somit der elektrische Energieverbrauch des Systems reduziert werden.

Die zentrale Auswertungselektronik empfängt die von den einzelnen Sensorelektroniken ermittelten Ursachen für die jeweilige Verschlechterung der Datenqualität bzw. Informationen hierzu und ermittelt auf Basis dieser Informationen, und gegebenenfalls weiterer Fahrzeugdaten, die plausibelste Ursache. Dazu werden die in den einzelnen Sensorelektroniken erzeugten Informationen, nämlich die gegebene Datenqualität des jeweiligen Umfeldsensors und die Ursache für diese Datenqualität, an die zentrale Auswertungselektronik übertragen. Mit der zentralen Auswertungselektronik wird aus den Informationen der einzelnen Sensorelektroniken eine zentrale und fusionierte Information über die plausibelste Ursache, beispielsweise die plausibelste Umweltbedingung in der Umgebung des Kraftfahrzeugs, erzeugt. Hierdurch kann gewährleistet werden, dass die tatsächliche Ursache für die jeweils gegebene Datenqualität mit höherer Wahrscheinlichkeit erkannt wird. Falls die Datenqualitätserkennung einer einzelnen Sensorelektronik eine andere, insbesondere falsche, Ursache für die Verschlechterung der Datenqualität als die plausibelste Ursache liefert, kann die falsche Ursache durch die zentrale Auswertungselektronik plausibilisiert und gegebenenfalls geändert werden.

Mit der Erfindung kann folglich ein Auslösen einer verfügbarkeitserhöhenden Maßnahme aufgrund einer falsch erkannten Ursache einer Verschlechterung der Datenqualität des jeweiligen Umfeldsensors weitestgehend verhindert werden. Befindet sich das Kraftfahrzeug beispielsweise im dichten Nebel, können beispielsweise die folgenden Ursachen für Verschlechterungen der Datenqualität von den einzelnen Sensorelektroniken angegeben werden. Eine Sensorelektronik eines frontseitig am Kraftfahrzeug verbauten Umfeldsensors in Form eines LiDAR-Sensors kann aus der gegebenen Datenqualität darauf schließen, dass als Ursache für die Verschlechterung der Datenqualität eine Salzverschmutzung des Umfeldsensors mit einer Wahrscheinlichkeit von 60% vorliegt. Gleichzeitig kann eine weitere Sensorelektronik eines frontseitig am Kraftfahrzeug verbauten Umfeldsensors in Form einer an einer Innenseite einer Frontscheibe angeordneten Kamera aus der gegebenen Datenqualität darauf schließen, dass als Ursache für die Verschlechterung der Datenqualität das Vorliegen von Nebel mit einer Wahrscheinlichkeit von 80% verantwortlich ist. Gleichzeitig kann eine weitere Sensorelektronik eines frontseitig am Kraftfahrzeug verbauten Umfeldsensors in Form einer an einer Fahrzeugfront angeordneten Kamera aus der gegebenen Datenqualität darauf schließen, dass als Ursache für die Verschlechterung der Datenqualität das Vorliegen von Nebel mit einer Wahrscheinlichkeit von 90% verantwortlich ist. Die zentrale Auswertungselektronik entscheidet auf Basis dieser Informationen, dass die wahrscheinlichste Ursache für die Verschlechterung der Datenqualität der Umfeldsensoren Nebel ist. Eine etwaige Reinigung des LiDAR-Sensors mittels eines Reinigungssystems, die durch eine herkömmliche reine sensorelektronikbasierte Entscheidung durchgeführt worden wäre, wird unterbunden. In einer vorteilhaften Ausgestaltung kann mittels der zentralen Auswertungselektronik statt einer falschen verfügbarkeitserhöhenden Maßnahme eine zweckmäßige verfügbarkeitserhöhende Maßnahme ausgewählt werden, beispielsweise kann statt der Reinigung bei feinem Nebel eine Beheizung des jeweiligen Umfeldsensors erfolgen.

Jede Sensorelektronik ist in der Lage, die jeweilig gegebene Verschlechterung der Datenqualität der von dem jeweiligen Umfeldsensor erzeugten Daten zu ermitteln und die Ursache für diese Verschlechterung aus verschiedenen möglichen Ursachen zu ermitteln. Eine Ursache für eine Verschlechterung der Datenqualität kann beispielsweise Nebel, Schnee oder Regen im Umfeld des Kraftfahrzeugs sein. Des Weiteren kann eine Ursache für eine Verschlechterung der Datenqualität das Vorhandensein von Salz, Eis oder dergleichen an dem jeweiligen Umfeldsensor sein. Die Ermittlung der Ursache für die Verschlechterung der Datenqualität kann aber, wie oben beschrieben, fehlerhaft sein.

Das erfindungsgemäße System zum Reinigen von Umfeldsensoren des Kraftfahrzeugs kann je nach den Gegebenheiten eine Reinigung des jeweiligen Umfeldsensors mittels einer Reinigungsflüssigkeit, mittels Druckluft, mittels Ultraschall und/oder mittels einer Beheizung des Umfeldsensors durchführen. Hierzu sind die einzelnen Behandlungseinrichtungen entsprechend ausgebildet.

Ein Umfeldsensor des erfindungsgemäßen Systems kann beispielsweise in Form einer Kamera, eines LiDAR-Sensors oder eines RADAR-Sensors gegeben sein. Alternativ kann ein Umfeldsensor ein FIR-Sensor sein. Das erfindungsgemäße System kann irgendeine Kombination dieser Sensortypen aufweisen, bei der sich wenigstens zwei Umfeldsensoren in den von ihnen jeweilig eingesetzten Messprinzipien voneinander unterscheiden.

Die zentrale Auswertungselektronik kann als separate Baueinheit ausgebildet sein. Alternativ kann die zentrale Auswertungselektronik durch eine Software-Implementierung in eine vorhandene Fahrzeugelektronik realisiert sein.

Gemäß einer vorteilhaften Ausgestaltung ist jede Sensorelektronik eingerichtet ist, anhand der Verschlechterung der Datenqualität des ihr zugeordneten Umfeldsensors Wahrscheinlichkeiten zum Vorliegen der verschiedenen möglichen Ursachen zu ermitteln, diejenige Ursache mit der höchsten Wahrscheinlichkeit auszuwählen und ein Informationssignal zu erzeugen, das eine Information zur Ursache mit der höchsten Wahrscheinlichkeit und eine Information zur Wahrscheinlichkeit der Ursache mit der höchsten Wahrscheinlichkeit enthält. Die Berücksichtigung der Wahrscheinlichkeiten der von den Sensorelektroniken ermittelten Ursachen macht eine verbesserte Prüfung der Plausibilität dieser Ursachen und ein exakteres Auffinden der Ursache mit der höchsten Plausibilität möglich.

Vorteilhafterweise ist wenigstens ein Umfeldsensor ein LiDAR-Sensor, ein RADAR-Sensor oder eine Kamera. Der LiDAR-Sensor und/oder der RADAR-Sensor können bzw. kann im Bereich eines Kühlergrills an einer Fahrzeugfront des Kraftfahrzeugs angeordnet werden. Die Kamera kann an einer Innenseite einer Frontscheibe oder an der Fahrzeugfront angeordnet werden.

Es ist des Weiteren von Vorteil, wenn wenigstens eine Behandlungseinrichtung eine Flüssigkeitsspritzeinrichtung oder eine Heizeinrichtung ist. Die Flüssigkeitsspritzeinrichtung kann wenigstens ein Flüssigkeitsreservoir, wenigstens eine Düse zum Beaufschlagen des Umfeldsensors mit einem Flüssigkeitsstrahl und wenigstens eine mit der Auswertungselektronik ansteuerbare Pumpe zum Pumpen von Flüssigkeit von dem Flüssigkeitsreservoir zu der Düse aufweisen. Die Heizeinrichtung kann wenigstens einen Heizdraht bzw. Widerstandsdraht und wenigstens einen mit der Auswertungselektronik ansteuerbaren Schalter aufweisen, über den der Heizdraht mit einer elektrischen Energiequelle des Kraftfahrzeugs verbindbar ist. Alternativ kann wenigstens eine Behandlungseinrichtung eine andere die Verfügbarkeit des Umfeldsensors erhöhende Maßnahme durchführen, beispielsweise eine Reinigung des Umfeldsensors mittels Ultraschall, Druckluft oder dergleichen durchführen.

Ein erfindungsgemäßes Kraftfahrzeug weist wenigstens ein System nach einer der oben genannten Ausgestaltungen oder einer Kombination von wenigstens zwei dieser Ausgestaltungen miteinander auf.

Mit dem Kraftfahrzeug sind die oben mit Bezug auf das System genannten Vorteile entsprechend verbunden. Das Kraftfahrzeug kann beispielsweise mit einer Funktion zum Durchführen eines teilautonomen oder autonomen Fahrbetriebs ausgestattet sein, zu deren Realisierung das System verwendet wird bzw. die damit gewonnenen Informationen verwendet werden.

Bei einem erfindungsgemäßen Verfahren zum Reinigen von wenigstens zwei Umfeldsensoren eines Kraftfahrzeugs, die sich in von ihnen jeweilig zum Erfassen von Umfeldinformationen eingesetzten Messprinzipien voneinander unterscheiden, wird für jeden Umfeldsensor eine Datenqualität von Sensordaten, die von dem jeweiligen Umfeldsensor erzeugt werden, überwacht, bei einer Verschlechterung der Datenqualität dieser Verschlechterung eine bestimmte Ursache aus verschiedenen möglichen Ursachen zugeordnet und ein Informationssignal erzeugt, das eine Information zur bestimmten Ursache der Verunreinigung enthält. Zudem werden die Ursachen gemäß den Informationssignalen auf ihre jeweilige Plausibilität geprüft und es erfolgt die Reinigung der Umfeldsensoren in Abhängigkeit der plausibelsten Ursache.

Mit dem Verfahren sind die oben mit Bezug auf das System genannten Vorteile entsprechend verbunden. Insbesondere kann das System gemäß einer der oben genannten Ausgestaltungen oder einer Kombination von wenigstens zwei dieser Ausgestaltungen miteinander zur Durchführung des Verfahrens verwendet werden.

Gemäß einer vorteilhaften Ausgestaltung ist vorgesehen, dass anhand der Verschlechterung der Datenqualität des jeweiligen Umfeldsensors Wahrscheinlichkeiten zum Vorliegen der verschiedenen möglichen Ursachen ermittelt werden, diejenige Ursache mit der höchsten Wahrscheinlichkeit ausgewählt werden und ein Informationssignal erzeugt wird, das eine Information zur Ursache mit der höchsten Wahrscheinlichkeit und eine Information zur Wahrscheinlichkeit der Ursache mit der höchsten Wahrscheinlichkeit enthält. Mit dieser Ausgestaltung sind die oben mit Bezug auf die entsprechende Ausgestaltung des Systems genannten Vorteile entsprechend verbunden.

Weitere Einzelheiten, Merkmale und Vorteile der Erfindung ergeben sich aus der nachfolgenden Beschreibung und den Figuren. Es zeigen:
- Figur 1: eine schematische Darstellung eines Ausführungsbeispiels für ein erfindungsgemäßes Kraftfahrzeug 1; und
- Figur 2: ein Ablaufdiagramm eines Ausführungsbeispiels für ein erfindungsgemäßes Verfahren.

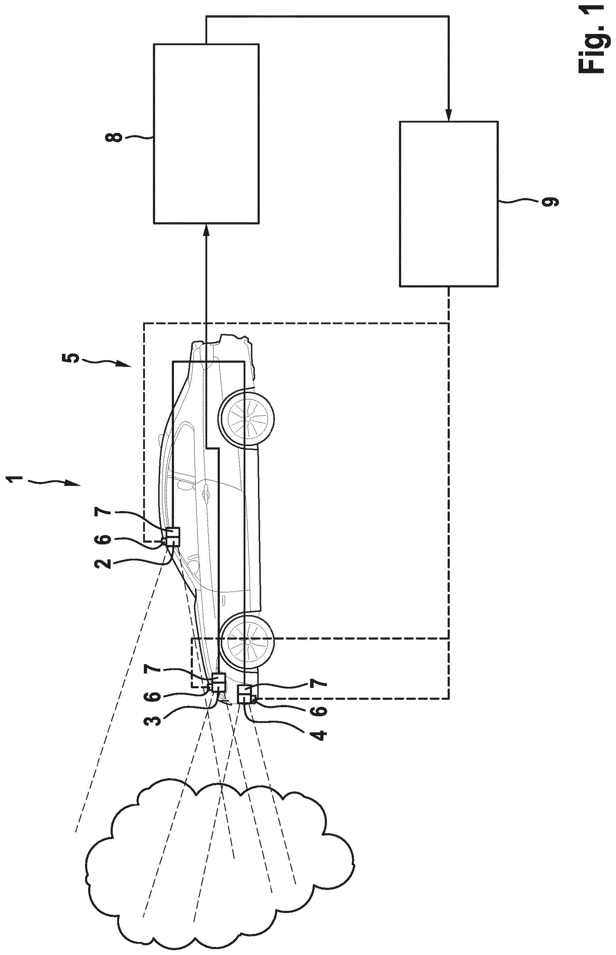

Figur 1 zeigt eine schematische Darstellung eines Ausführungsbeispiels für ein erfindungsgemäßes Kraftfahrzeug 1, das drei in Vorwärtsfahrrichtung Umfeldinformationen erfassende Umfeldsensoren 2, 3 und 4 aufweist. Der Umfeldsensor 2 ist eine an einer Innenseite einer nicht gezeigten Frontscheibe des Kraftfahrzeugs 1 angeordnete Kamera, der Umfeldsensor 3 ist eine an einer Fahrzeugfront angeordnete Kamera und der Umfeldsensor 4 ist ein an der Fahrzeugfront angeordneter LiDAR-Sensor. Die Umfeldsensoren 2 und 4 bzw. 3 und 4 unterscheiden sich in von ihnen jeweilig zum Erfassen von Umfeldinformationen eingesetzten Messprinzipien voneinander.

Das Kraftfahrzeug 1 weist ein System 5 zum Reinigen der Umfeldsensoren 2, 3 und 4 auf. Das System 5 weist pro Umfeldsensor 2, 3 bzw. 4 eine Behandlungseinrichtung 6 zum Entfernen einer Verunreinigung von dem jeweiligen Umfeldsensor 2, 3 bzw. 4 und eine mit dem jeweiligen Umfeldsensor 2, 3 bzw. 4 verbundene Sensorelektronik 7 auf. Wenigstens eine Behandlungseinrichtung 6 ist eine Flüssigkeitsspritzeinrichtung oder eine Heizeinrichtung.

Jede Sensorelektronik 7 ist eingerichtet, eine Datenqualität von Sensordaten, die von dem mit ihr verbundenen Umfeldsensor 2, 3 bzw. 4 erzeugt werden, zu überwachen, bei einer Verschlechterung der Datenqualität dieser Verschlechterung eine bestimmte Ursache aus verschiedenen möglichen Ursachen zuzuordnen und ein Informationssignal zu erzeugen, das eine Information zur bestimmten Ursache der Verunreinigung enthält.

Zudem kann jede Sensorelektronik 7 eingerichtet sein, anhand der Verschlechterung der Datenqualität des ihr zugeordneten Umfeldsensors 2, 3 bzw. 4 Wahrscheinlichkeiten zum Vorliegen der verschiedenen möglichen Ursachen zu ermitteln, diejenige Ursache mit der höchsten Wahrscheinlichkeit auszuwählen und ein Informationssignal zu erzeugen, das eine Information zur Ursache mit der höchsten Wahrscheinlichkeit und eine Information zur Wahrscheinlichkeit der Ursache mit der höchsten Wahrscheinlichkeit enthält.

Des Weiteren weist das System 5 eine mit den Sensorelektroniken 7 verbundene Auswertungselektronik 8 auf, die eingerichtet ist, die Ursachen gemäß den Informationssignalen auf ihre jeweilige Plausibilität zu prüfen und die Behandlungseinrichtungen 6 in Abhängigkeit der plausibelsten Ursache anzusteuern.

Ferner weist das System 5 eine globale Reinigungslogik 9 auf, der die Auswertungselektronik 8 eine Information zur plausibelsten Ursache der Datenqualitätsverschlechterung zuführt und über die die Auswertungselektronik 8 die Behandlungseinrichtungen 6 ansteuert.

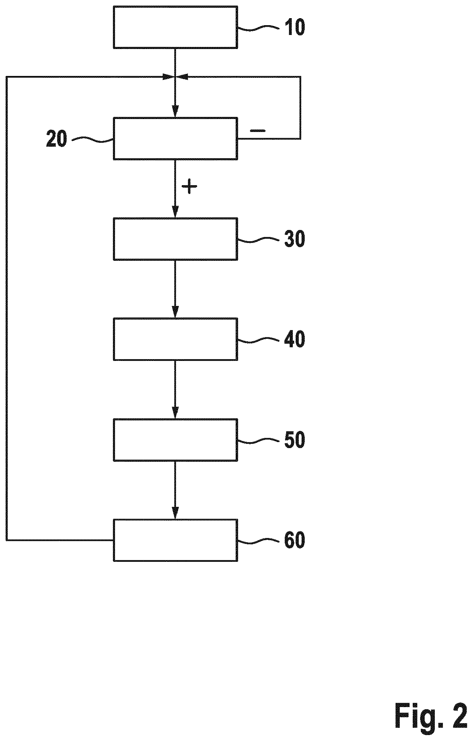

Figur 2 zeigt ein Ablaufdiagramm eines Ausführungsbeispiels für ein erfindungsgemäßes Verfahren zum Reinigen von wenigstens zwei nicht gezeigten Umfeldsensoren eines nicht gezeigten Kraftfahrzeugs, die sich in von ihnen jeweilig zum Erfassen von Umfeldinformationen eingesetzten Messprinzipien voneinander unterscheiden.

In Schritt 10 wird für jeden Umfeldsensor eine Überwachung einer Datenqualität von Sensordaten, die von dem jeweiligen Umfeldsensor erzeugt werden, gestartet. In Schritt 20 wird geprüft, ob eine Verschlechterung der Datenqualität der Sensordaten um ein vorgegebenes Ausmaß gegeben ist oder nicht. Ist eine Verschlechterung der Datenqualität der Sensordaten um ein vorgegebenes Ausmaß gegeben, wird in Schritt 30 der Verschlechterung der Datenqualität eine bestimmte Ursache aus verschiedenen möglichen Ursachen zugeordnet. In Schritt 40 wird ein Informationssignal erzeugt, das eine Information zur bestimmten Ursache der Verunreinigung enthält. In Schritt 50 werden die Ursachen gemäß den Informationssignalen auf ihre jeweilige Plausibilität geprüft. In Schritt 60 erfolgt die Reinigung der Umfeldsensoren in Abhängigkeit der plausibelsten Ursache. Anschließend kann die Überwachung der Datenqualität fortgesetzt werden.

In Schritt 30 können anhand der Verschlechterung der Datenqualität des jeweiligen Umfeldsensors Wahrscheinlichkeiten zum Vorliegen der verschiedenen möglichen Ursachen ermittelt werden. Zudem kann in Schritt 30 diejenige Ursache mit der höchsten Wahrscheinlichkeit ausgewählt werden. In Schritt 40 kann ein Informationssignal erzeugt werden, das eine Information zur Ursache mit der höchsten Wahrscheinlichkeit und eine Information zur Wahrscheinlichkeit der Ursache mit der höchsten Wahrscheinlichkeit enthält.

### Bezugszeichenliste:

- 1: Kraftfahrzeug
- 2: Umfeldsensor
- 3: Umfeldsensor
- 4: Umfeldsensor
- 5: System
- 6: Behandlungseinrichtung
- 7: Sensorelektronik
- 8: Auswertungselektronik
- 9: globale Reinigungslogik
- 10: Verfahrensschritt
- 20: Verfahrensschritt
- 30: Verfahrensschritt
- 40: Verfahrensschritt
- 50: Verfahrensschritt
- 60: Verfahrensschritt

## Patentansprüche

1. System (5) zum Reinigen von Umfeldsensoren (2, 3, 4) eines Kraftfahrzeugs (1), die sich in von ihnen jeweilig zum Erfassen von Umfeldinformationen eingesetzten Messprinzipien voneinander unterscheiden, aufweisend pro Umfeldsensor (2, 3, 4) wenigstens eine Behandlungseinrichtung (6) zum Entfernen einer Verunreinigung von dem Umfeldsensor (2, 3, 4) und wenigstens eine mit dem Umfeldsensor (2, 3, 4) verbundene Sensorelektronik (7), **dadurch gekennzeichnet, dass** jede Sensorelektronik (7) eingerichtet ist, eine Datenqualität von Sensordaten, die von dem mit ihr verbundenen Umfeldsensor (2, 3, 4) erzeugt werden, zu überwachen, bei einer Verschlechterung der Datenqualität dieser Verschlechterung eine bestimmte Ursache aus verschiedenen möglichen Ursachen zuzuordnen und ein Informationssignal zu erzeugen, das eine Information zur bestimmten Ursache der Verunreinigung enthält, ferner **gekennzeichnet durch** wenigstens eine mit den Sensorelektroniken (7) verbundene Auswertungselektronik (9), die eingerichtet ist, die Ursachen gemäß den Informationssignalen auf ihre jeweilige Plausibilität zu prüfen und die Behandlungseinrichtungen (6) in Abhängigkeit der plausibelsten Ursache anzusteuern.

2. System (5) nach Anspruch 1, **dadurch gekennzeichnet, dass** jede Sensorelektronik (7) eingerichtet ist, anhand der Verschlechterung der Datenqualität des ihr zugeordneten Umfeldsensors (2, 3, 4) Wahrscheinlichkeiten zum Vorliegen der verschiedenen möglichen Ursachen zu ermitteln, diejenige Ursache mit der höchsten Wahrscheinlichkeit auszuwählen und ein Informationssignal zu erzeugen, das eine Information zur Ursache mit der höchsten Wahrscheinlichkeit und eine Information zur Wahrscheinlichkeit der Ursache mit der höchsten Wahrscheinlichkeit enthält.

3. System (5) nach Anspruch 1 oder 2, **dadurch gekennzeichnet, dass** wenigstens ein Umfeldsensor (2, 3, 4) ein LiDAR-Sensor, ein RADAR-Sensor oder eine Kamera ist.

4. System (5) nach einem der Ansprüche 1 bis 3, **dadurch gekennzeichnet, dass** wenigstens eine Behandlungseinrichtung (6) eine Flüssigkeitsspritzeinrichtung oder eine Heizeinrichtung ist.

5. Kraftfahrzeug (1), **gekennzeichnet durch** wenigstens ein System (5) nach einem der Ansprüche 1 bis 4.

6. Verfahren zum Reinigen von wenigstens zwei Umfeldsensoren (2, 3, 4) eines Kraftfahrzeugs (1), die sich in von ihnen jeweilig zum Erfassen von Umfeldinformationen eingesetzten Messprinzipien voneinander unterscheiden, **dadurch gekennzeichnet, dass** für jeden Umfeldsensor (2, 3, 4) eine Datenqualität von Sensordaten, die von dem jeweiligen Umfeldsensor (2, 3, 4) erzeugt werden, überwacht wird, bei einer Verschlechterung der Datenqualität dieser Verschlechterung eine bestimmte Ursache aus verschiedenen möglichen Ursachen zugeordnet wird und ein Informationssignal erzeugt wird, das eine Information zur bestimmten Ursache der Verunreinigung enthält, und dass die Ursachen gemäß den Informationssignalen auf ihre jeweilige Plausibilität geprüft werden und die Reinigung der Umfeldsensoren (2, 3, 4) in Abhängigkeit der plausibelsten Ursache erfolgt.

7. Verfahren nach Anspruch 6, **dadurch gekennzeichnet, dass** anhand der Verschlechterung der Datenqualität des jeweiligen Umfeldsensors (2, 3, 4) Wahrscheinlichkeiten zum Vorliegen der verschiedenen möglichen Ursachen ermittelt werden, diejenige Ursache mit der höchsten Wahrscheinlichkeit ausgewählt werden und ein Informationssignal erzeugt wird, das eine Information zur Ursache mit der höchsten Wahrscheinlichkeit und eine Information zur Wahrscheinlichkeit der Ursache mit der höchsten Wahrscheinlichkeit enthält.

## Claims

1. System (5) for cleaning environmental sensors (2, 3, 4) of a motor vehicle (1), which differ from one another in terms of measurement principles respectively used thereby to capture environmental information, having, for each environmental sensor (2, 3, 4), at least one treatment device (6) for removing contamination from the environmental sensor (2, 3, 4) and at least one sensor electronic system (7) connected to the environmental sensor (2, 3, 4), **characterized in that** each sensor electronic system (7) is configured to monitor a data quality of sensor data generated by the environmental sensor (2, 3, 4) connected to it, to assign, in the case of a deterioration in the data quality, a particular cause from various possible causes to this deterioration and to generate an information signal containing an item of information relating to the particular cause of the contamination, also **characterized by** at least one evaluation electronic system (9) which is connected to the sensor electronic systems (7) and is configured to check the respective plausibility of the causes according to the information signals and to control the treatment devices (6) on the basis of the most plausible cause.

2. System (5) according to Claim 1, **characterized in that** each sensor electronic system (7) is configured to determine probabilities of the presence of the various possible causes on the basis of the deterioration in the data quality of the environmental sensor (2, 3, 4) assigned to it, to select the cause with the highest probability and to generate an information signal containing an item of information relating to the cause with the highest probability and an item of information relating to the probability of the cause with the highest probability.

3. System (5) according to Claim 1 or 2, **characterized in that** at least one environmental sensor (2, 3, 4) is a lidar sensor, a radar sensor or a camera.

4. System (5) according to one of Claims 1 to 3, **characterized in that** at least one treatment device (6) is a liquid spraying device or a heating device.

5. Motor vehicle (1) **characterized by** at least one system (5) according to one of Claims 1 to 4.

6. Method for cleaning at least two environmental sensors (2, 3, 4) of a motor vehicle (1), which differ from one another in terms of measurement principles respectively used thereby to capture environmental information, **characterized in that**, for each environmental sensor (2, 3, 4), a data quality of sensor data generated by the respective environmental sensor (2, 3, 4) is monitored, in the case of a deterioration in the data quality, a particular cause from various possible causes is assigned to this deterioration and an information signal containing an item of information relating to the particular cause of the contamination is generated, and **in that** the respective plausibility of the causes is checked according to the information signals and the environmental sensors (2, 3, 4) are cleaned on the basis of the most plausible cause.

7. Method according to Claim 6, **characterized in that** probabilities of the presence of the various possible causes are determined on the basis of the deterioration in the data quality of the respective environmental sensor (2, 3, 4), the cause with the highest probability is selected and an information signal containing an item of information relating to the cause with the highest probability and an item of information relating to the probability of the cause with the highest probability is generated.

## Revendications

1. Système (5) de nettoyage de capteurs périphériques (2, 3, 4) d'un véhicule automobile (1) qui se distinguent les uns des autres par les principes de mesure mis en œuvre respectivement pour détecter des informations sur l'environnement, présentant par capteur périphérique (2, 3, 4) au moins un dispositif de traitement (6) servant à retirer une salissure du capteur périphérique (2, 3, 4) et au moins une électronique de capteur (7) reliée au capteur périphérique (2, 3, 4),
**caractérisé en ce que** chaque électronique de capteur (7) est aménagée pour surveiller une qualité de données de données de capteur qui sont produites par le capteur périphérique (2, 3, 4) relié à celle-ci, en cas de détérioration de la qualité de données, pour associer à cette détérioration une certaine cause parmi différentes causes possibles, et pour produire un signal d'information qui contient une information concernant la cause déterminée de la salissure,
**caractérisé en outre par** au moins une électronique d'évaluation (9) reliée aux électroniques de capteur (7) et qui est aménagée pour vérifier la plausibilité respective des causes selon les signaux d'information et pour piloter les dispositifs de traitement (6) en fonction de la cause la plus plausible.

2. Système (5) selon la revendication 1, **caractérisé en ce que** chaque électronique de capteur (7) est aménagée pour établir à l'aide de la détérioration de la qualité de données du capteur périphérique (2, 3, 4) qui lui est associé des probabilités de la présence des différentes causes possibles, pour sélectionner la cause ayant la plus haute probabilité et pour produire un signal d'information qui contient une information concernant la cause ayant la plus haute probabilité et une information concernant la probabilité de la cause ayant la plus haute probabilité.

3. Système (5) selon la revendication 1 ou 2, **caractérisé en ce qu'**au moins un capteur périphérique (2, 3, 4) est un capteur lidar, un capteur radar ou une caméra.

4. Système (5) selon l'une quelconque des revendications 1 à 3, **caractérisé en ce qu'**au moins un dispositif de traitement (6) est un dispositif de projection de liquide ou un dispositif de chauffage.

5. Véhicule automobile (1), caractérisé en par au moins un système (5) selon l'une quelconque des revendications 1 à 4.

6. Procédé de nettoyage d'au moins deux capteurs périphériques (2, 3, 4) d'un véhicule automobile (1), qui se distinguent les uns des autres par les principes de mesure mis en œuvre respectivement pour détecter des informations sur l'environnement,
**caractérisé en ce que** pour chaque capteur périphérique (2, 3, 4) une qualité de données de données de capteur qui sont produites par le capteur périphérique (2, 3, 4) respectif est surveillée, en cas de détérioration de la qualité de données, cette détérioration est associée à une certaine cause parmi différentes causes possibles, et un signal d'information est produit qui contient une information concernant la cause déterminée de la salissure, et **en ce que** les causes sont vérifiées selon les signaux d'information quant à leur plausibilité respective, et le nettoyage des capteurs périphériques (2, 3, 4) est effectué en fonction de la cause la plus plausible.

7. Procédé selon la revendication 6, **caractérisé en ce qu'**à l'aide de la détérioration de la qualité de données du capteur périphérique (2, 3, 4) respectif, des probabilités de la présence des différentes causes possibles sont déterminées, la cause ayant la plus haute probabilité est sélectionnée, et un signal d'information est produit qui contient une information concernant la cause ayant la plus haute probabilité et une information concernant la probabilité de la cause ayant la plus haute probabilité.
